# EUROPEAN PATENT SPECIFICATION

(11) **EP 2 706 005 B1**
(45) Date of publication and mention of the grant of the patent: **11.04.2018**
(21) Application number: 13003951.4
(22) Date of filing: 07.08.2013
(51) Int. Cl.: B62M 6/50, B60L 11/00, B60L 15/20, B62M 6/45

(54) **Motor drive controller and power-assisted vehicle**
Motorsteuerung und Fahrzeug mit Hilfsantrieb
Contrôleur d'unité d'entraînement de moteur et véhicule à commande assistée

(30) Priority: 05.09.2012 JP 2012195304
(43) Date of publication of application: 12.03.2014
(73) Proprietor: TAIYO YUDEN CO., LTD., Tokyo 110-0005 (JP)
(72) Inventor: Hosaka, Yasuo, Tokyo, 110-0005 (JP); Shirakawa, Hirokazu, Tokyo, 110-0005 (JP); Asanuma, Kazuo, Tokyo, 110-0005 (JP); Sakurai, Tatsuya, Tokyo, 110-0005 (JP)
(74) Representative: Müller-Boré & Partner Patentanwälte PartG mbB

(56) References cited:
- EP-A1- 0 569 954
- EP-A1- 0 635 423
- EP-A2- 0 976 649
- US-A- 5 664 636

## Description

### BACKGROUND OF THE INVENTION

### 1. Field of the Invention

The present invention relates to a so-called power-assisted vehicle such as a bicycle with a motor, or a motor drive controller of the power-assisted vehicle.

### 2. Description of the Related Art

Japanese Unexamined Patent Application Publication No. 7-143603 discloses known technology for preventing sudden start caused by malfunction of an electric motor of a power-assisted vehicle at a temporarily stop at an intersection or the like. With this known technology, when a state in which the pedal effort is greater than or equal to a certain value, the speed of the power-assisted vehicle is zero, and the number of pedal rotations is zero is within a certain period of time, it is determined that the pedals are mistakenly depressed, and sudden start is prevented by not driving the electric motor.

Meanwhile, Japanese Unexamined Patent Application Publication No. 4-358988 discloses known technology for enabling the rider of a bicycle with an electric motor to easily push the bicycle along with his/her feet by utilizing the driving force of the electric motor, such as when climbing a steep hill on the bicycle. With this known technology, when the driving torque of human power is zero, the speed of the bicycle is greater than or equal to a certain speed in an advancing direction, and a specially provided switch is turned ON, it is determined that the bicycle is in a push-and-walk state, and the electric motor is driven. However, nothing has been disclosed for the method of using the special switch other than that in the push-and-walk state. Also, driving the electric motor even though the driving torque of human power is zero may cause a statutory problem.

Besides the above-described method, a few other techniques for preventing sudden start of a power-assisted vehicle are available. Any of these techniques involves a poor response in circumstances where an assist is demanded, such as when the rider is climbing on a steep hill on the bicycle.

EP 0 635 423 A1, which is considered as the closest prior art, discloses a muscle-operated vehicle in particular bicycle, which comprises an auxiliary electrical power driving system and sensor means for detecting the vehicle speed and the human driving power for driving the vehicle wherein a control means for controlling the operation of the auxiliary electrical power driving system is provided which comprises the fail-safe means for sensing any abnormality in the detection system of detecting the vehicle speed and/or the human driving power.

### SUMMARY OF THE INVENTION

An aspect of the present invention, which invention is defined by claim 1, provides a motor drive controller capable of improving a usability of a power-assisted vehicle with a motor.

A motor drive controller for a power-assisted vehicle with a motor according to an aspect of the invention includes (A) a moving start sensor configured to output a moving start signal in response to a moving start instruction given from a rider; and (B) a controller configured to start driving the motor, in the case where the moving start signal from the moving start sensor is detected, in response to a pedal torque input or a pedal rotation input. In the case where the moving start signal from the moving start sensor is not detected, the above-described controller starts driving the motor after confirmation that the pedal torque input or the pedal rotation input is not an input error.

With the moving start sensor, the rider's intention to start moving can be accurately detected. Thus, a rapid assist in response to the intention can be given.

In the case where the moving start signal from the moving start sensor is not detected, the above-described controller starts driving the motor after confirmation that the pedal torque input or the pedal rotation input is not an input error. Accordingly, sudden start caused by a detection error can be effectively prevented.

Further, the torque input may be an arithmetic operation result obtained from an input from a torque sensor or the pedal rotation input output from a pedal rotation sensor.

A program for causing a microprocessor to implement the above-described processing can be configured. The program is stored in, for example, a flexible disk, an optical disc such as a compact-disc read-only memory (CD-ROM), a magneto-optical disc, a semiconductor memory (such as a read-only memory (ROM)), or a computer-readable storage medium or storage device such as a hard disk. Data being processed is temporarily stored in a storage device such as a random-access memory (ROM).

According to the aspect, a smooth assist can be given in response to the rider's intention.

### BRIEF DESCRIPTION OF THE DRAWINGS

Fig. 1 is a diagram showing the external appearance of a motor-assisted bicycle according to a first embodiment;
Fig. 2 is a functional block diagram of a motor drive controller according to the first embodiment;
Fig. 3 is a waveform chart for describing the basic operation of motor driving;
Fig. 4 is a functional block diagram of an arithmetic operation unit according to the first embodiment;
Fig. 5 is a diagram showing the external appearance of a motor-assisted bicycle according to a second embodiment;
Fig. 6 is a functional block diagram of a motor drive controller according to the second embodiment;
Fig. 7 is a functional block diagram of an arithmetic operation unit according to the second embodiment;
Fig. 8 is a diagram showing the external appearance of a motor-assisted bicycle according to a third embodiment;
Fig. 9 is a functional block diagram of a motor drive controller according to the third embodiment;
Fig. 10 is a functional block diagram of an arithmetic operation unit according to the third embodiment; and
Fig. 11 is a functional block diagram in the case where the functions are implemented by a microprocessor.

### DESCRIPTION OF THE PREFERRED EMBODIMENTS

### First Embodiment

According to a first embodiment, a moving start sensor for inputting a moving start instruction from the rider is newly provided, and a torque sensor for the pedals is used instead of a rotation sensor for the pedals.

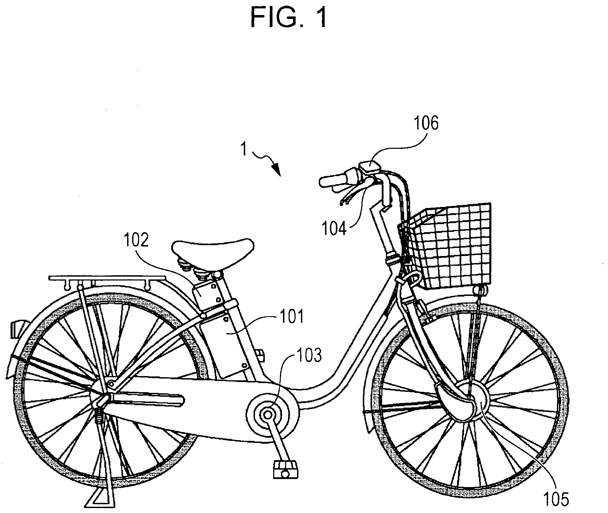

Fig. 1 is an external view of an example of a motor-assisted bicycle, which is a power-assisted vehicle, according to the first embodiment. A motor-assisted bicycle 1 shown in Fig. 1 is, for example, a general rear-wheel drive type in which the crankshaft and the rear wheel are connected via a chain.

The motor-assisted bicycle 1 includes a motor drive. The motor drive includes a secondary battery 101, a motor drive controller 102, a torque sensor 103, a brake sensor 104, and a moving start sensor 106 that detects a moving start instruction given from the rider.

The secondary battery 101 is, for example, a lithium-ion secondary battery whose maximum supply voltage (voltage at full charge) is 24 V. Alternatively, the secondary battery 101 may be a battery of another type, such as a lithium-ion polymer secondary battery or a nickel-metal-hydride rechargeable battery.

The torque sensor 103 is provided on a wheel attached to the crankshaft. The torque sensor 103 detects the pedal effort from the rider and outputs the detection result to the motor drive controller 102.

The brake sensor 104 includes a magnet and a known lead switch. The magnet is fixed to a brake wire connected to a brake lever in a housing which fixes the brake lever and through which the brake wire is wired. The brake lever is configured to turn ON the lead switch when held in hand. Also, the lead switch is fixed to the interior of the housing. A continuity signal of the lead switch is transmitted to the motor drive controller 102.

The motor 105 is, for example, a known three-phase direct-current brushless motor and is attached to, for example, the front wheel of the motor-assisted bicycle 1. The rotor of the motor 105 is fixed to the front wheel in order that the front wheel is rotated and that the rotor rotates in accordance with the rotation of the front wheel. Further, the motor 105 includes a rotation sensor such as a Hall-effect device and outputs rotation information of the rotor (that is, a Hall-effect signal) to the motor drive controller 102.

The moving start sensor 106 is set to ON when the rider particularly intentionally demands an assist from the motor 105 such as when climbing a hill, and outputs a moving start signal to the motor drive controller 102.

The motor-assisted bicycle 1 may further include an operation panel. The operation panel accepts, for example, an instruction input from the rider relating to the presence/absence of an assist, and outputs the input instruction to the motor drive controller 102. Further, the operation panel may accept an assist ratio setting input from the rider and may output the setting input to the motor drive controller 102. Also, a transmission or the like may output a signal representing a transmission gear ratio to the motor drive controller 102.

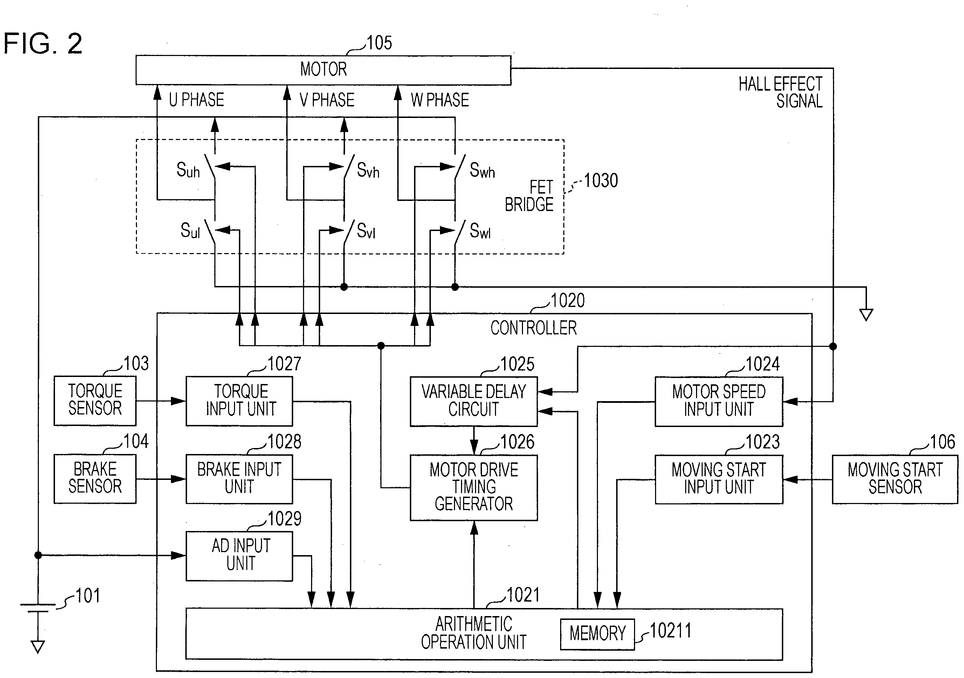

Fig. 2 shows a configuration relating to the motor drive controller 102 of the motor-assisted bicycle 1. The motor drive controller 102 includes a controller 1020 and a field effect transistor (FET) bridge 1030. The FET bridge 1030 includes a high-side FET (Sᵤₕ) and a low-side FET (Sᵤₗ) which perform switching of the U phase of the motor 105, a high-side FET (Sᵥₕ) and a low-side FET (Sᵥₗ) which perform switching of the V phase of the motor 105, and a high-side FET (S_{wh}) and a low-side FET (S_{wl}) which perform switching of the W phase of the motor 105. The FET bridge 1030 constitutes part of a complementary switching amplifier.

The controller 1020 also includes an arithmetic operation unit 1021, a moving start input unit 1023, a motor speed input unit 1024, a variable delay circuit 1025, a motor drive timing generator 1026, a torque input unit 1027, a brake input unit 1028, and an analog-to-digital (AD) input unit 1029.

The arithmetic operation unit 1021 performs arithmetic operations using a moving start input from the moving start input unit 1023 connected to the moving start sensor 106, an input from the motor speed input unit 1024, an input from the torque input unit 1027, an input from the brake input unit 1028, an input from the AD input unit 1029, and the like, and outputs the arithmetic operation results to the motor drive timing generator 1026 and the variable delay circuit 1025. The arithmetic operation unit 1021 has a memory 10211. The memory 10211 stores various types of data used in the arithmetic operations, data being processed, and the like. Further, the arithmetic operation unit 1021 may be realized by executing a program by a processor. In this case, the program may be recorded in the memory 10211.

The motor speed input unit 1024 calculates a motor speed or the like from a Hall-effect signal output from the motor 105, and outputs the motor speed or the like to the arithmetic operation unit 1021. The torque input unit 1027 digitizes a signal corresponding to the pedal effort from the torque sensor 103, and outputs the digitized signal as a pedal torque to the arithmetic operation unit 1021. The brake input unit 1028 digitizes a signal corresponding to a brake force from the brake sensor 104, and outputs the digitized signal to the arithmetic operation unit 1021. The AD input unit 1029 digitizes an output voltage from the secondary battery 101, and outputs the digitized output voltage to the arithmetic operation unit 1021. The moving start input unit 1023 outputs a moving start input, which is ON or OFF in accordance with a signal from the moving start sensor 106, to the arithmetic operation unit 1021. The memory 10211 may be provided separately from the arithmetic operation unit 1021.

The arithmetic operation unit 1021 outputs a lead angle value, which is the arithmetic operation result, to the variable delay circuit 1025. On the basis of the lead angle value received from the arithmetic operation unit 1021, the variable delay circuit 1025 adjusts the phase of the Hall-effect signal, and outputs the adjusted Hall-effect signal to the motor drive timing generator 1026. The arithmetic operation unit 1021 outputs, as the arithmetic operation result, for example, a pulse width modulation (PWM) code corresponding to the duty ratio of PWM to the motor drive timing generator 1026. On the basis of the adjusted Hall-effect signal from the variable delay circuit 1025 and the PWM code from the arithmetic operation unit 1021, the motor drive timing generator 1026 generates a switching signal for each of the FETs included in the FET bridge 1030 and outputs the signal to each of the FETs.

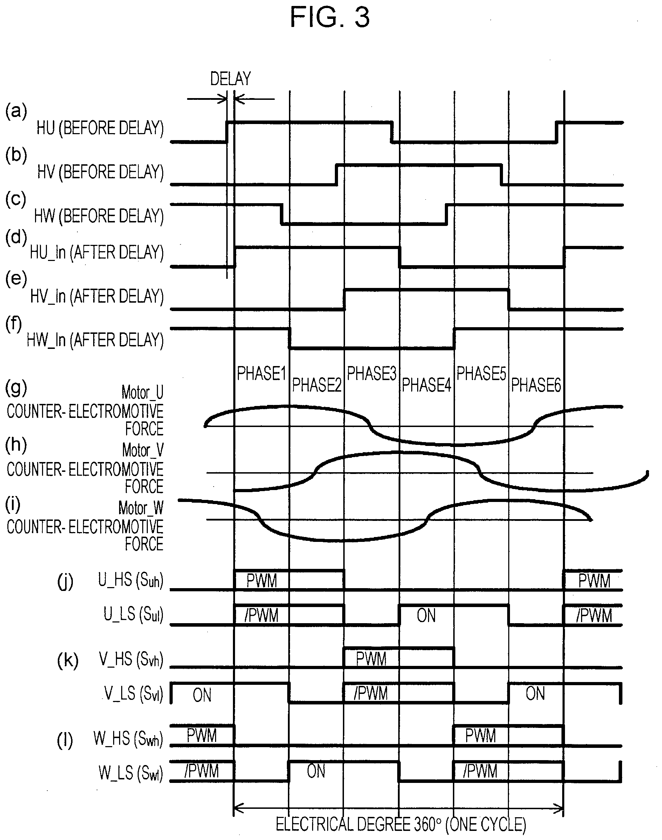

Using portions (a) to (1) of Fig. 3, the basic operation of motor driving by using the configuration shown in Fig. 2 will be described. Portion (a) of Fig. 3 represents a U-phase Hall-effect signal HU output by the motor 105. Portion (b) of Fig. 3 represents a V-phase Hall-effect signal HV output by the motor 105. Portion (c) of Fig. 3 represents a W-phase Hall-effect signal HW output by the motor 105. In this manner, a Hall-effect signal represents the rotation phase of the motor 105. Although the rotation phases are not obtained here as consecutive values, consecutive values may be obtained with the use of another sensor or the like. In the first embodiment, the Hall-effect device of the motor 105 is set such that a Hall-effect signal is output with a slightly advanced phase, as shown in Fig. 3, which enables the variable delay circuit 1025 to adjust the Hall-effect signal. Therefore, as shown in portion (d) of Fig. 3, the adjusted U-phase Hall-effect signal HU_In is output from the variable delay circuit 1025 to the motor drive timing generator 1026; as shown in portion (e) of Fig. 3, the adjusted V-phase Hall-effect signal HV_In is output from the variable delay circuit 1025 to the variable delay circuit 1025; and, as shown in portion (f) of Fig. 3, the adjusted W-phase Hall-effect signal HW_In is output from the variable delay circuit 1025 to the motor drive timing generator 1026.

One cycle of a Hall-effect signal is represented as 360 degrees and is divided into six phases.

As shown in portions (g) to (i) of Fig. 3, counter-electromotive force voltages are generated. That is, a Motor_U counter-electromotive force is generated at a U-phase terminal; a Motor_V counter-electromotive force is generated at a V-phase terminal; and a Motor_W counter-electromotive force is generated at a W-phase terminal. In order to drive the motor 105 by supplying driving voltages in phase with these motor counter-electromotive force voltages, switching signals shown in portions (j) to (1) of Fig. 3 are output to the gates of the FETs of the FET bridge 1030. In portion (j) of Fig. 3, U_HS represents a gate signal of the U-phase high-side FET (Sᵤₕ), and U_LS represents a gate signal of the U-phase low-side FET (Sᵤₗ). PWM and "/PWM" represent turning ON/OFF periods based on the duty ratio in accordance with the PWM code, which is the arithmetic operation result of the arithmetic operation unit 1021. Since the FET bridge 1030 is a complementary type, if PWM is ON, /PWM is OFF, and, if PWM is OFF, /PWM is ON. The low-side FET (Sᵤₗ) is always turned ON in an "ON" section. In portion (k) of Fig. 3, V_HS represents a gate signal of the V-phase high-side FET (Sᵥₕ), and V_LS represents a gate signal of the V-phase low-side FET (Sᵥₗ). Symbols in portion (k) of Fig. 3 have the same meanings as those in portion (j) of Fig. 3. Further, in portion (1) of Fig. 3, W_HS represents a gate signal of the W-phase high-side FET (S_{wh}), and W_LS represents a gate signal of the W-phase low-side FET (S_{wl}). Symbols in portion (1) of Fig. 3 have the same meanings as those in portion (j) of Fig. 3.

In this manner, the U-phase FETs (Sᵤₕ and Sᵤₗ) perform switching of PWM in phases 1 and 2, and the U-phase low-side FET (Sᵤₗ) is turned ON in phases 4 and 5. Also, the V-phase FETs (Sᵥₕ and Sᵥₗ) perform switching of PWM in phases 3 and 4, and the V-phase low-side FET (Sᵥₗ) is turned ON in phases 6 and 1. Further, the W-phase FETs (S_{wh} and S_{wl}) perform switching of PWM in phases 5 and 6, and the W-phase low-side FET (S_{wl}) is turned ON in phases 2 and 3.

The motor 105 can be driven by a desired torque by outputting such signals and appropriately controlling the duty ratio.

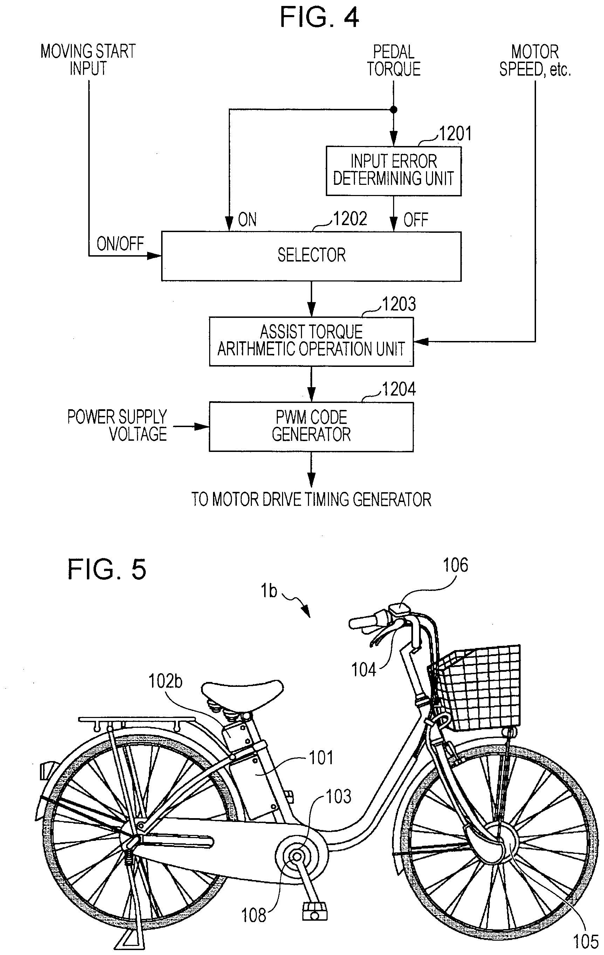

Next, Fig. 4 is a functional block diagram of the arithmetic operation unit 1021. The arithmetic operation unit 1021 includes an input error determining unit 1201, a selector 1202, an assist torque arithmetic operation unit 1203, and a PWM code generator 1204.

When the value of a pedal torque corresponding to the pedal effort detected by the torque sensor 103 is greater than or equal to, for example, a certain value, and when this state continues for a certain period of time or longer, the input error determining unit 1201 outputs the pedal torque to the selector 1202. When this condition is not satisfied, the pedal torque is not output to the selector 1202. The pedal torque from the torque input unit 1027 is input as it is to the selector 1202 without being via the input error determining unit 1201.

A moving start input (ON or OFF) output in accordance with a signal from the moving start sensor 106 to which the rider gives a moving start instruction is input as a select input to the selector 1202. When the moving start input is ON, the selector 1202 outputs the pedal torque itself. When the moving start input is OFF, the selector 1202 outputs the output of the input error determining unit 1201.

That is, when the rider inputs a moving start instruction, it is determined that there is no input error, and the pedal torque itself is output to the assist torque arithmetic operation unit 1203. That is, an assist can be promptly given in response to the rider's intention to start moving.

In contrast, when the rider inputs no moving start instruction, the pedal torque may be an input error. Thus, the input error determining unit 1201 determines whether the pedal torque is an input error. When the pedal torque is not an input error, the input error determining unit 1201 outputs the pedal torque to the assist torque arithmetic operation unit 1203. Accordingly, an assist from the motor 105 can be prevented in circumstances such as when the rider simply places his/her foot on a pedal at a standstill, and the risk of sudden start can be avoided.

The assist torque arithmetic operation unit 1203 performs a certain arithmetic operation based on the pedal torque from the selector 1202, the motor speed, and the like, and outputs a duty code relating to the duty ratio of PWM to the PWM code generator 1204. The arithmetic operation performed by the assist torque arithmetic operation unit 1203 is, for example, an arithmetic operation discussed in detail in International Publication No. WO2012/086458 and the like. Briefly, the pedal torque is converted to a first duty code corresponding to a duty ratio in accordance with a certain rule, the motor speed is converted to a second duty code corresponding to a duty ratio in accordance with a certain rule, and a duty code to be output to the PWM code generator 1204 is calculated by adding the first and second duty codes.

The PWM code generator 1204 generates a PWM code by multiplying the duty code by a battery voltage/reference voltage (such as 24 V) from the AD input unit 1029. The PWM code is output to the motor drive timing generator 1026. Driving of the motor 105 as described above is performed.

By performing the above-described arithmetic operations, a rapid assist can be given in response to the rider's intention without giving an unintended assist.

### Second Embodiment

A second embodiment is the same as the first embodiment in the point that a moving start sensor is incorporated, but the second embodiment is an embodiment of a motor-assisted bicycle including a pedal rotation sensor and a torque sensor.

As shown in Fig. 5, a motor drive in a motor-assisted bicycle 1b according to the second embodiment includes the secondary battery 101, a motor drive controller 102b, the torque sensor 103, the brake sensor 104, the motor 105, the moving start sensor 106 which detects a moving start instruction given from the rider, and a pedal rotation sensor 108. The second embodiment is the same as the first embodiment except for the pedal rotation sensor 108 and the motor drive controller 102b. As with the case of the torque sensor 103, the pedal rotation sensor 108 is provided on the wheel attached to the crankshaft. The pedal rotation sensor 108 outputs a signal in accordance with the rotation to the motor drive controller 102b. The pedal rotation sensor 108 is capable of detecting not only the number of rotations, but also the rotation direction of the pedals such as the forward or reverse direction.

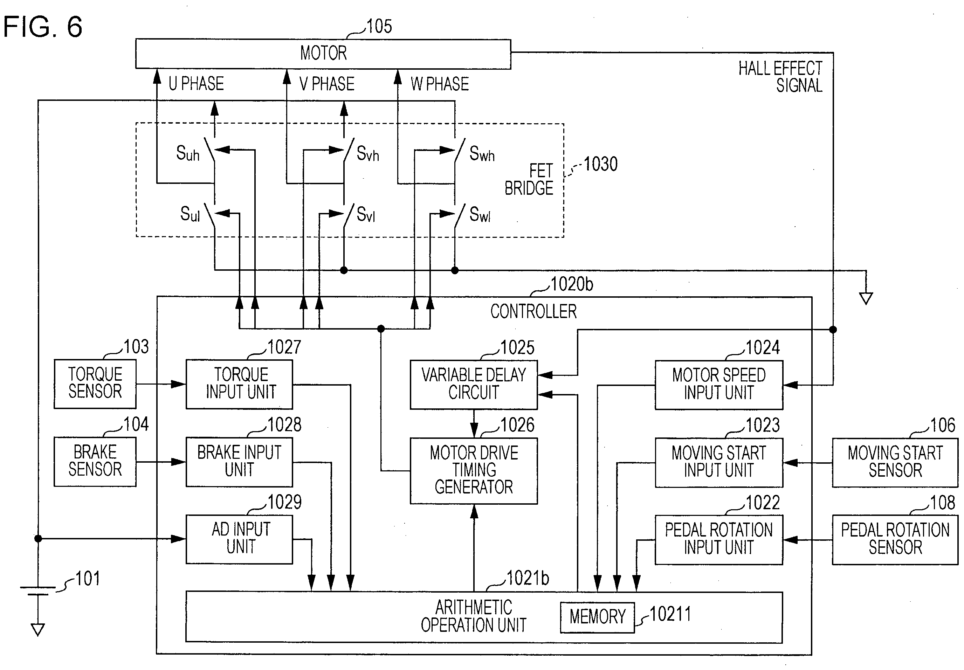

Fig. 6 is a functional block diagram of the motor drive controller 102b. A controller 1020b of the motor drive controller 102b shown in Fig. 6 additionally includes a pedal rotation input unit 1022. The pedal rotation input unit 1022 digitizes an input from the pedal rotation sensor 108, and outputs the digitized input to the arithmetic operation unit 1021b. Also, an arithmetic operation unit 1021b included in the controller 1020b performs arithmetic operations using inputs from the pedal rotation input unit 1022 and the moving start input unit 1023.

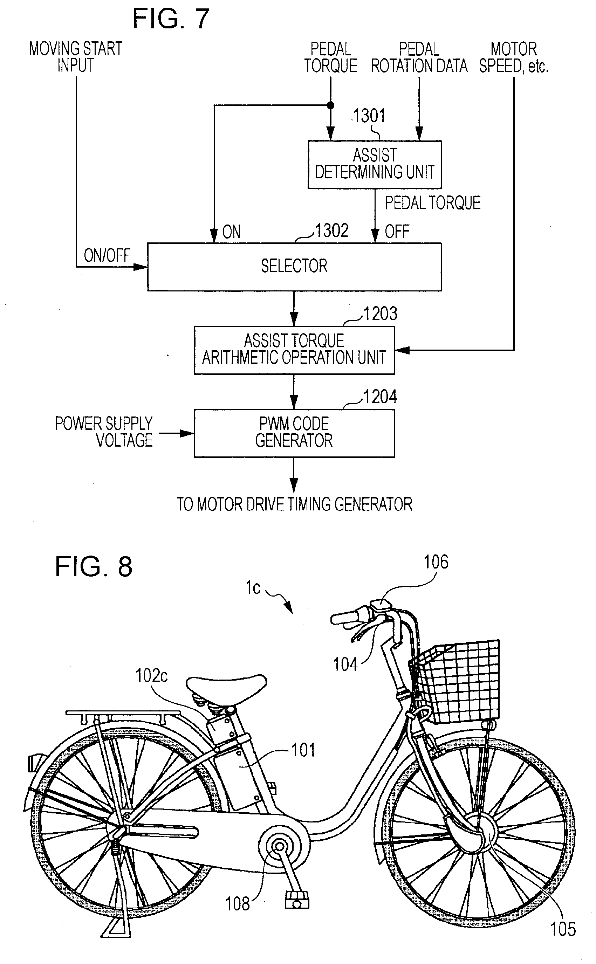

Next, Fig. 7 is a functional block diagram of the arithmetic operation unit 1021b. The arithmetic operation unit 1021b includes an assist determining unit 1301, a selector 1302, the assist torque arithmetic operation unit 1203, and the PWM code generator 1204. Elements that have the same functions as those in the first embodiment are given the same reference numerals.

The pedal torque and pedal rotation data (such as the rotation direction (forward or reverse) and the number of rotations) are input to the assist determining unit 1301, and the assist determining unit 1301 determines whether the pedal torque is greater than or equal to a certain value, and whether the pedal rotations are in the forward direction and the number of pedal rotations is greater than or equal to a certain value. When these conditions are satisfied, the assist determining unit 1301 outputs the pedal torque to the selector 1302. When these conditions are not satisfied, the pedal torque is not output to the selector 1302. The pedal torque is input as it is to the selector 1302 without being via the assist determining unit 1301.

A moving start input (ON or OFF) output in accordance with a signal from the moving start sensor 106 to which the rider gives a moving start instruction is input as a select input to the selector 1302. When the moving start input is ON, the selector 1302 outputs the pedal torque itself. When the moving start input is OFF, the selector 1302 outputs the output of the assist determining unit 1301.

That is, when the rider inputs a moving start instruction, it is determined that there is no input error, and the pedal torque itself is output to the assist torque arithmetic operation unit 1203. That is, an assist can be promptly given in response to the rider's intention to start moving.

In contrast, when the rider inputs no moving start instruction, there may be an input error. Thus, the assist determining unit 1301 determines whether the pedals are rotating in the forward direction and the pedal torque is also applied. When this determination is affirmative, there is no input error, and the assist determining unit 1301 outputs the pedal torque to the assist torque arithmetic operation unit 1203. Accordingly, an assist from the motor 105 can be prevented in circumstances such as when the rider simply places his/her foot on a pedal at a standstill, and the risk of sudden start can be avoided.

Since the arithmetic operations performed by the assist torque arithmetic operation unit 1203 and the PWM code generator 1204 are the same as those in the first embodiment, descriptions thereof are omitted.

In this way, a rapid assist can be given in response to the rider's intention without giving an unintended assist.

### Third Embodiment

A third embodiment is the same as the first embodiment in the point that a moving start sensor is incorporated, but the third embodiment is an embodiment of a motor-assisted bicycle in which the pedal torque is calculated using a pedal rotation sensor, without using a torque sensor.

As shown in Fig. 8, a motor-assisted bicycle 1c according to the third embodiment includes the secondary battery 101, a motor drive controller 102c, the brake sensor 104, the motor 105, the moving start sensor 106 which detects a moving start instruction given from the rider, and the pedal rotation sensor 108. The third embodiment is the same as the first embodiment except for the point that the torque sensor 103 is not provided, the pedal rotation sensor 108 is added, and the motor drive controller 102 is changed to the motor drive controller 102c. The pedal rotation sensor 108 is provided on the wheel attached to the crankshaft. The pedal rotation sensor 108 outputs a signal in accordance with the rotation to the motor drive controller 102c. The pedal rotation sensor 108 is capable of detecting not only the number of rotations, but also the rotation direction of the pedals such as the forward or reverse direction.

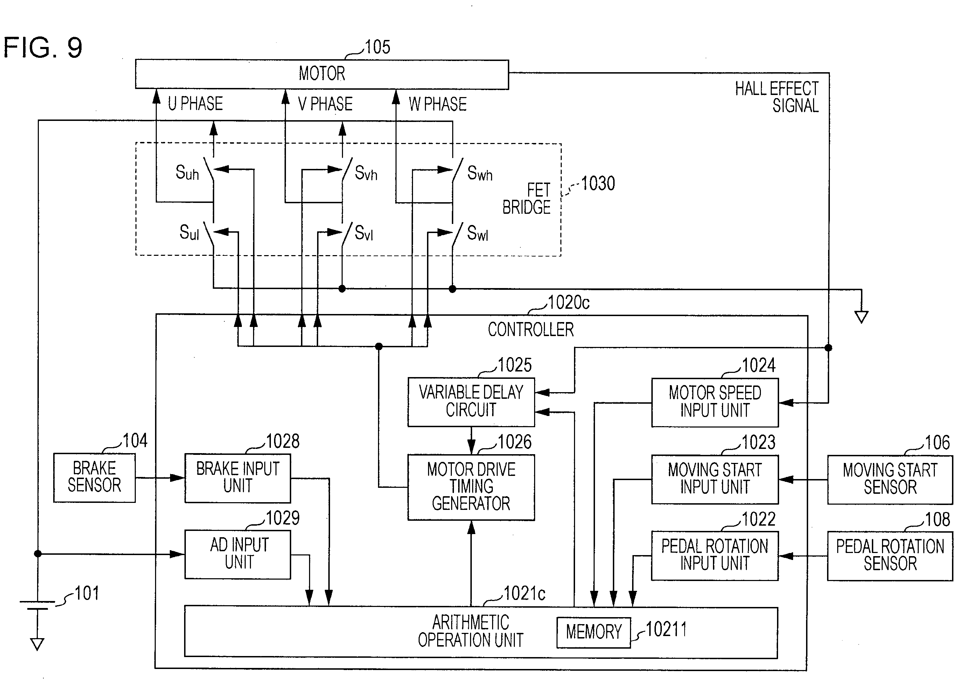

Fig. 9 is a functional block diagram of the motor drive controller 102c. A controller 1020c of the motor drive controller 102c shown in Fig. 9 has no torque input unit 1027, but additionally includes the pedal rotation input unit 1022. The pedal rotation input unit 1022 digitizes an input from the pedal rotation sensor 108, and outputs the digitized input to the arithmetic operation unit 1021c. Also, an arithmetic operation unit 1021c included in the controller 1020c performs arithmetic operations using inputs from the pedal rotation input unit 1022 and the moving start input unit 1023.

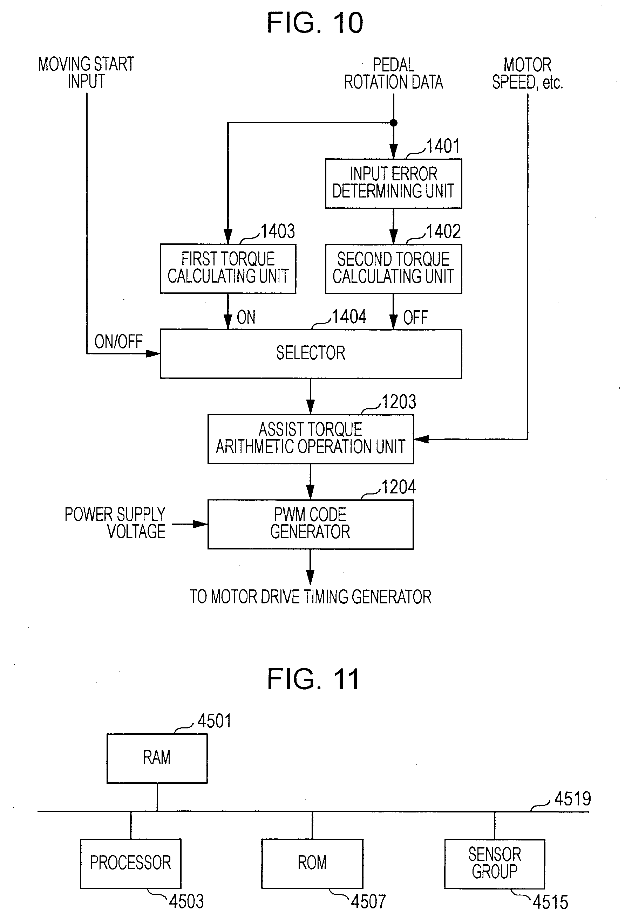

Next, Fig. 10 is a functional block diagram of the arithmetic operation unit 1021c. The arithmetic operation unit 1021c includes an input error determining unit 1401, a first torque calculating unit 1403, a second torque calculating unit 1402, a selector 1404, the assist torque arithmetic operation unit 1203, and the PWM code generator 1204. Elements that have the same functions as those in the first embodiment are given the same reference numerals.

On the basis of input rotation data (data on the rotation direction and the number of rotations), the input error determining unit 1401 determines, for example, whether the number of rotations is greater than or equal to a certain number, and whether this state continues for a certain period of time or longer. When this condition is satisfied, the input error determining unit 1401 outputs the pedal rotation data to the second torque calculating unit 1402. In contrast, when this condition is not satisfied, the pedal rotation data is not output to the second torque calculating unit 1402, and the pedal torque is also not output to the selector 1404. If the rotation is in the forward direction, the second torque calculating unit 1402 calculates the pedal torque from the pedal rotation data, and outputs the pedal torque to the selector 1404. The arithmetic operation performed here uses, for example, technology disclosed in Japanese Unexamined Patent Application Publication No. 2010-264772. Briefly, this arithmetic operation can be performed by converting a phase difference of the pedal rotation data (such as a rectangular wave pulse signal) into the pedal torque in accordance with a certain rule. No problem occurs as long as the rotation is in the forward direction. However, in circumstances such as when the rider is climbing a steep hill, the pedals may be rotated in the reverse direction for a very short period of time. Thus, rotation in the reverse direction within a certain period of time that expresses a very short period of time is allowable.

Meanwhile, the first torque calculating unit 1403 calculates the pedal torque from the pedal rotation data itself from the pedal rotation input unit 1022 instead of the input error determining unit 1401, and outputs the pedal torque to the selector 1404. The content of the arithmetic operation is the same as that performed by the second torque calculating unit 1402.

A moving start input (ON or OFF) output in accordance with a signal from the moving start sensor 106 to which the rider gives a moving start instruction is input as a select input to the selector 1404. When the moving start input is ON, the selector 1404 outputs the pedal torque that is the output of the first torque calculating unit 1403. When the moving start input is OFF, the selector 1404 outputs the pedal torque that is the output of the second torque calculating unit 1402.

That is, when the rider inputs a moving start instruction, it is determined that there is no input error, and the pedal torque calculated from the pedal rotation data is output to the assist torque arithmetic operation unit 1203. That is, an assist can be promptly given in response to the rider's intention to start moving.

In contrast, when the rider inputs no moving start instruction, there may be an input error. Thus, the input error determining unit 1401 determines whether there is an input error on the basis of the pedal rotation data. When there is no input error, the pedal torque calculated by the second torque calculating unit 1402 is output to the assist torque arithmetic operation unit 1203. Accordingly, an assist from the motor 105 can be prevented in circumstances such as when the rider simply places his/her foot on a pedal at a standstill, and the risk of sudden start can be avoided.

Since the arithmetic operations performed by the assist torque arithmetic operation unit 1203 and the PWM code generator 1204 are the same as those in the first embodiment, descriptions thereof are omitted.

In this way, a rapid assist can be given in response to the rider's intention without giving an unintended assist.

Although the embodiments of the present invention have been described above, the present invention is not limited to these embodiments. For example, the above-described functional block diagrams are separated into functional blocks for the sake of convenience, and the actual circuit configuration may be different. When the functions are realized by a program, the functional blocks may not coincide with a program module configuration. Further, there are multiple specific arithmetic operation techniques for realizing the above-described functions, and any of these techniques may be adopted.

Part or entirety of the motor drive controllers 102, 102b, and 102c may be realized as a dedicated circuit, or the above-described functions of the motor drive controllers 102, 102b, and 102c may be realized by executing a program by a microprocessor.

In this case, the motor drive controllers 102, 102b, and 102c are realized by a configuration shown in Fig. 11. The configuration includes a random-access memory (RAM) 4501, a processor 4503, a read-only memory (ROM) 4507, and a sensor group 4515, which are connected by a bus 4519. A program for implementing processing in the embodiments and, if any, an operating system (OS) are stored in the ROM 4507. When the program and OS are executed by the processor 4503, the program and OS are loaded from the ROM 4507 to the RAM 4501. The ROM 4507 additionally records other parameters such as a threshold, and these parameters are also loaded. The processor 4503 controls the above-described sensor group 4515 and obtains measurement values. Also, data being processed is stored in the RAM 4501. The processor 4503 may include the ROM 4507 and may further include the RAM 4501. In the embodiments, a control program for implementing the above-described processing may be stored in a computer-readable removable disk and distributed, and the control program may be written to the ROM 4507 by a ROM writer. Such a computer device executes various functions described as above by organic cooperation between hardware such as the above-described processor 4503, RAM 4501, and ROM 4507 and the program (and OS in some cases).

## Claims

1. A motor drive controller (102, 102b, 102c) for a power-assisted vehicle with a motor (105), comprising:
a moving start sensor (106) configured to output a moving start signal in response to a moving start instruction given from a rider; and
a controller (1020, 1020b, 1020c) configured to start driving the motor (105), in the case where the moving start signal from the moving start sensor (106) is detected, in response to a pedal torque input or a pedal rotation input,
wherein, in the case where the moving start signal from the moving start sensor (106) is not detected, the controller (1020, 1020b, 1020c) starts driving the motor (105) after confirmation that the pedal torque input or the pedal rotation input is not an input error.

2. The motor drive controller (102, 102b, 102c) according to Claim 1, wherein the pedal torque input is an arithmetic operation result obtained from an input from a torque sensor (103) or the pedal rotation input output from a pedal rotation sensor (108) .

3. A power-assisted vehicle comprising the motor drive controller (102, 102b, 102c) according to Claim 1 or 2.

## Patentansprüche

1. Motorantriebscontroller (102, 102b, 102c) für ein Fahrzeug mit Hilfsantrieb bzw. motorunterstütztes Fahrzeug mit einem Motor (105), umfassend:
einen Bewegungsstartsensor (106), der konfiguriert ist, ein Bewegungsstartsignal als Antwort auf eine von einem Fahrer abgegebene Bewegungsstartsanweisung auszugeben; und
einen Controller (1020, 1020b, 1020c), der konfiguriert ist, den Antrieb des Motors (105) in dem Fall zu starten, in dem das Bewegungsstartsignal von dem Bewegungsstartsensor (106) erfasst wird, und zwar als Antwort auf eine Pedaldrehmomenteingabe oder eine Pedaldrehungseingabe,
wobei in dem Fall, in dem das Bewegungsstartsignal von dem Bewegungsstartsensor (106) nicht erfasst wird, der Controller (1020, 1020b, 1020c) den Antrieb des Motors (105) nach Bestätigung, dass die Pedaldrehmomenteingabe oder die Pedaldrehungseingabe kein Eingabefehler ist, startet.

2. Motorantriebscontroller (102, 102b, 102c) nach Anspruch 1, wobei die Pedaldrehmomenteingabe ein arithmetisches Operationsergebnis ist, das aus einer Eingabe von einem Drehmomentsensor (103) oder der Pedaldrehungseingabeausgabe von einem Pedaldrehungssensor (108) erhalten wird.

3. Fahrzeug mit Hilfsantrieb bzw. motorunterstütztes Fahrzeug mit dem Motorantriebscontroller (102, 102b, 102c) nach Anspruch 1 oder 2.

## Revendications

1. Contrôleur d'entraînement de moteur (102, 102b, 102c) pour un véhicule assisté avec un moteur (105), comprenant :
un capteur de démarrage de déplacement (106) configuré pour émettre un signal de démarrage de déplacement en réponse à une instruction de démarrage de déplacement donnée par un motocycliste ; et
un contrôleur (1020, 1020b, 1020c) configuré pour démarrer l'entraînement du moteur (105), au cas où le signal de démarrage de déplacement provenant du capteur de démarrage de déplacement (106) est détecté, en réponse à une entrée de couple de pédale ou une entrée de rotation de pédale,
dans lequel, au cas où le signal de démarrage de déplacement provenant du capteur de démarrage de déplacement (106) n'est pas détecté, le contrôleur (1020, 1020b, 1020c) démarre l'entraînement du moteur (105) après confirmation que l'entrée de couple de pédale ou l'entrée de rotation de pédale n'est pas une erreur d'entrée.

2. Contrôleur d'entraînement de moteur (102, 102b, 102c) selon la revendication 1, dans lequel l'entrée de couple de pédale est un résultat d'opération arithmétique obtenu à partir d'une entrée provenant d'un capteur de couple (103) ou de l'entrée de rotation de pédale émise depuis un capteur de rotation de pédale (108).

3. Véhicule assisté comprenant le contrôleur d'entraînement de moteur (102, 102b, 102c) selon la revendication 1 ou 2.
